# EUROPEAN PATENT SPECIFICATION

(11) **EP 0 366 623 B1**
(45) Date of publication and mention of the grant of the patent: **04.08.1993**
(21) Application number: 89830461.3
(22) Date of filing: 24.10.1989
(51) Int. Cl.: F16D 7/08

(54) **Transmission coupling with limitation of the transmissible torque**
Drehmomentbegrenzende Drehkupplung
Accouplement de transmission avec limitation de couple

(30) Priority: 28.10.1988 IT 494188 U; 29.06.1989 IT 353189
(43) Date of publication of application: 02.05.1990
(73) Proprietor: O.M.C. S.n.c. di DANTE CAVALLI & C., 40055 Villanova di Castenaso (Bologna) (IT)
(72) Inventor: Cavalli, Dante, I-40055 Villanova di Castenaso (Bologna) (IT)
(74) Representative: Grünecker, Kinkeldey, Stockmair & Schwanhäusser Anwaltssozietät

(56) References cited:
- DE-A- 2 853 803
- GB-A- 1 098 990
- US-A- 2 866 325

## Description

The invention relates to a transmission coupling with limitation of the transmissible torque as defined in the first part of claim 1.

In the mechanical field it is known that transmission couplings are used both for the simple transmission of torques between machine shafts for equipment and to limit the maximum value of the torque they transmit.

This type of coupling, usually known as torque limiter, for example known from US-A-2866325, consists of a pair of coaxial hubs which can be linked to the shafts to be coupled and necessitates the positioning of separable connecting elements between these hubs.

In a form of a torque limiting coupling, connection is made by means of rotating bodies and their respective seatings made in opposite transverse faces of the hubs. The rotating bodies, usually spheres or rollers, are fixed in respective seatings made in the corresponding hub.

The hubs are also subject to the action of elastic means which can be calibrated by adjustment, keeping them close to the rotating bodies relative to one hub positioned in the respective seatings made in the other hub.

When the rotating bodies are all positioned inside their respective seatings, front claw coupling takes place, in which a rotation of the hub connected to the engine shaft causes a corresponding rotation in the other hub.

As soon as the torque produced by the engine hub overcomes the calibration reaction of the elastic means, the engine hub begins to rotate with respect to the driven hub and the rotating bodies subsequently leave their respective seatings.

Following this, should the torque decrease in value, as soon as all the rotating bodies arrive together in front of a seating, the reaction of the elastic means is sufficient to move both the hubs closer so that the rotating bodies return to the seatings and cause the mutual engagement of the hubs as in a front claw coupling.

However in certain cases the rotating bodies and the seatings both need to be counterfaced for a single value of the reciprocal rotation between the two hubs: in other words, a single seating should correspond to each rotating body.

This is obtained by using an appropriate number of rotating bodies and positioning them along a circumference in order to obtain the above-mentioned condition.

Another requisite of these torque limiting couplings is that the two hubs must be kept constantly coaxial, independently of the reciprocal rotation around the common axis.

This means that for any value of the angle of reciprocal rotation between the hubs there must be at least three rotating bodies which are not counterfaced by seatings.

A further requisite for the correct functioning of the torque limiting couplings is that these three points should never find themselves on the same side of a diameter and that the angles at the centre subtended by two of the adjacent angles are as small as possible so that the support points, ie. the rotating bodies not counterfaced by seatings, are as reciprocally equidistant as possible.

However in the present state of the art, all these requirements could only be satisfied with the partial exclusion of the last property stated.

In the known torque limiting couplings, the rotating bodies and therefore also their respective seatings are in fact positioned so that the maximum angle subtended by two adjacent rotating bodies reaches about 165° as a minimum value; for example as known in DE-A-2853803.

This means that, at worst, two adjacent supports are almost at the same diameter: the forces in action, ie. the forces of reaction of the elastic means, are however such that they cause the=coupling itself to lose the necessary stability with loss of coaxiality between the hubs.

The purpose of this invention is to provide a coupling of the aforementioned type in which it is also possible to fulfil the last requirement stated to considerably improve the stability of the coupling independently of the reciprocal rotation of the two hubs around their common axis. The invention solves the problem using a coupling of the type as defined in claim 1.

The advantages of this invention will be clear from the following detailed description of its form which is purely an example and not restrictive, made with reference to the attached drawing in which:
Figure 1 shows a front perspective view of the two hubs constituting the transmission coupling according to the present invention, not connected together;
Figures 2 and 3 show a front view, with some parts removed for a better view of others, of the coupling referred to in Fig.1 in its engaging position and then also shown disengaged;
Figure 4 shows a front perspective view of a construction variant of the form referred to in Fig.1, according to a further characteristic of this invention;
Figure 5 shows a radial view of a detail referred to in Fig.4 with some parts removed for a better view of others.

With reference to the attached diagrams the transmission coupling of this invention able to limit the torque it transmits consists of a pair of hubs 1 and 2 which can be positioned coaxially and linked to the ends of two mechanical elements to be coupled kinematically, for example two engine and driven shafts which are not shown.

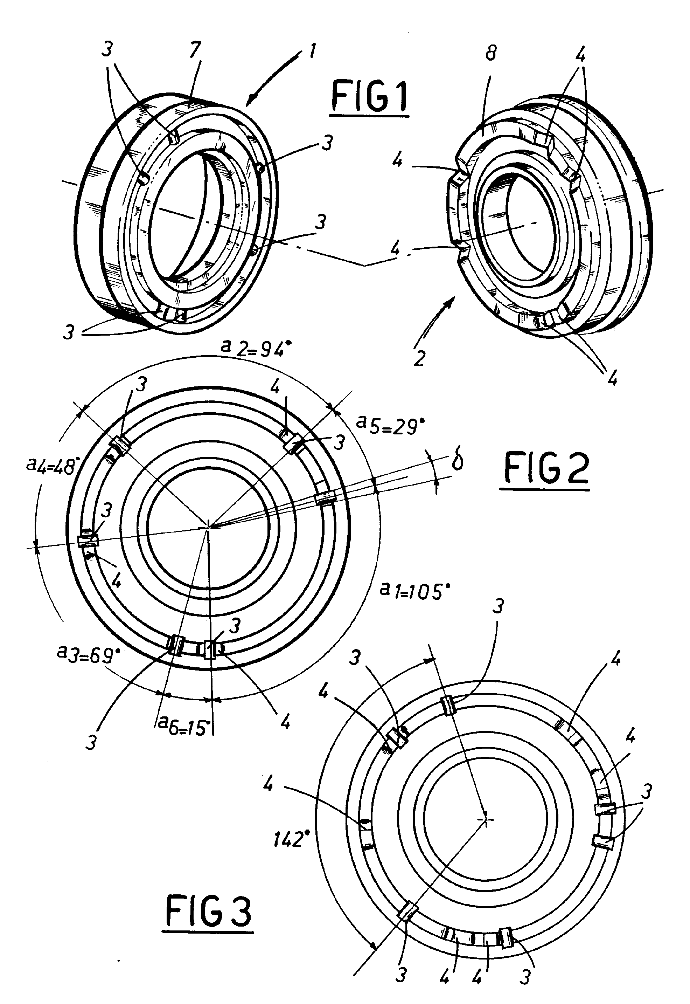

On the opposite faces of hubs 1 and 2 seatings are made along radial directions, of which those relative to hub 2 linked to the driven shaft are indicated with 4 and made to seat rotating bodies 3, for example rollers, as illustrated in Fig.1.

The seatings made in the engine hub 1, ie. the one linked to the engine shaft, have such a shape and size that the rollers 3 are inserted in them by simply moving them axially along the radial direction of development of the respective seating. This prevents the rollers 3 coming out of the respective seatings when hub 1 is positioned with such face facing downwards. A ring 7 is threaded onto hub 1 with allowance to prevent any axial unwinding of the rollers 3 from the respective seatings in hub 1 while allowing them to rotate freely around their own axes.

The seatings 4 of the hub 2 are made in correspondence with a ring projection 8 of the same which acts as a raceway for the rollers 4 when the coupling is in its disengaged state. During the reciprocal rotation of the hubs 1 and 2, following their disengagement, the rollers 3 which are not counterfaced to seatings 4 provide frontal supports for hub 1 on the ring projection 8 of hub 2.

Unlike those of hub 1, the seatings 4 have sloping sides so as to provide easy and more gradual engagement and disengagement of the rollers 3 in them.

The rollers 3 and the seatings 4 are positioned so that the rollers 3 can be engaged simultaneously in the seatings 4 for a single value of reciprocal rotation of the hubs 1 and 2, ie. hubs 1 and 2 must always complete a reciprocal rotation of a round angle before all the rollers 3 are engaged simultaneously in the respective seatings 4.

In compliance with the present invention the coupling is equipped with six rollers 3 and the same number of seatings 4.

The angles at the centre defined by each pair of rollers 3 or of consecutive seatings 4 are different from each other.

Another fundamental characteristic of the coupling as in the present invention is the fact that each angle at the centre defined by a pair of rollers 3 or of consecutive seatings 4 is not less than the angle at the centre which is immediately smaller plus the angle at the centre defined by each roller 3 or by each seating 4.

In addition, the greatest angle at the centre defined by a pair of rollers 3 or consecutive seatings 4 is different from each angle at the centre added to the immediately smaller angle and subtracted from the angle at the centre defined by each roller 3 or each seating 4.

Using a1, a2, a3, a4, a5 and a6 to indicate the angles at the centre defined by each pair of rollers 3 or by consecutive seatings 4 and similarly using δ to indicate the angle at the centre defined by each roller 3 or seating 4 (see Fig.3), in compliance with the present invention, these angles at the centre must satisfy the following conditions:
a1 + a2 + a3 + a4 + a5 + a6 = 360°
a1 > a2 + δ
a2 > a3 + δ
a3 > a4 + δ
a4 > a5 + δ
a5 > a6 + δ
a1 ≠ a1 + a2 - δ
a1 ≠ a2 + a3 - δ
a1 ≠ a3 + a4 - δ
a1 ≠ a4 + a5 - δ
a1 ≠ a5 + a6 -
In the form shown in the attached figures the following values were used:
a1 = 105°
a2 = 94°
a3 = 69°
a4 = 48°
a5 = 29°
a6 = 15°

In a coupling structured in this way, in the disengaged state between hubs 1 and 2 it is always possible to have at least three rollers 3 not counterfaced to seatings 4, ie. it is always possible to obtain at least three supports for hub 1, and in the disengaged state which is more precarious as regards the stability of the whole coupling a maximum angle of about 142° is obtained between rollers 3 and consecutive seatings 4 which are not counterfaced (see Fig.3). This value is quite near to 120°, a value which, with three rollers 3 not counterfaced to seatings 4, would provide the best possible stability between hubs 1 and 2.

As can be seen in Fig.3 the angle of 142° is greater than the angle defined by two consecutive rollers 3 but this is due to the fact that the roller 3 positioned between the rollers 3 defining this angle is counterfaced with a seating 4 and thus cannot constitute a frontal support for hub 1.

Thus it is clear that this "worst" condition of stability is decidedly better than the condition obtainable in the present state of the art.

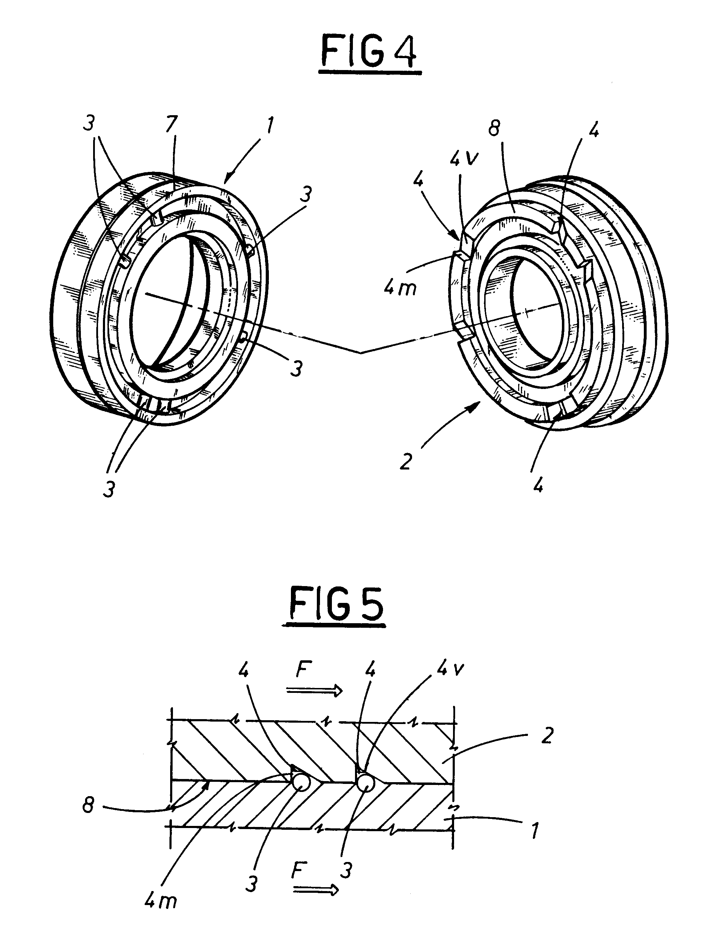

As can be seen in figures 4 and 5, the seatings 4 are defined by two side walls 4m, 4v both inclined to form a "V" and in the form illustrated these walls 4m, 4v are otherwise inclined with respect to the raceway for the rollers 3 defined by the ring projection 8. In other words, as can clearly be seen in Fig.5, the wall 4m of each seating 4 situated upstream with respect to the direction of rotation of hubs 1 and 2 shows an inclination much greater than that of the other wall 4v so that the torque needed for the rollers 3 to get over these more inclined walls 4m is decidedly greater than that needed for the lesser inclined walls 4v. The shape of the seatings 4 thus allows a privileged direction of rotation to be defined between hubs 1 and 2 in order to function well. More specifically, it allows a relative rotation to be obtained between hubs 1 and 2 where, as planned at the design stage, there is an increase of the resisting torque on the driven hub 2 without the inconvenience of relative rotations due to the rotation inertia of the elements kinematically connected to the driven hub 2, inertia that is activated for example when the rotation of the engine hub 1 is interrupted by the irregular functioning of the engine, typical of certain machining processes of machine tools. In fact, if the seatings 4 were not shaped in this way, it would be very easy for the relative rotation between engine hub 1 and driven hub 2 to take place each time the engine hub 1 decelerates or stops: if the walls 4m and 4v of the seatings 4 were similarly inclined, the inertia of the driven hub 2 would tend to generate a torque greater than the safety level of the coupling and would cause a relative rotation between hubs 1 and 2 which would be incompatible with the correct functioning of the machine tool during that machining stage.

In Fig.5 an extreme case has been illustrated in which the wall 4m positioned before any seating 4 is almost perpendicular to the raceway of the rollers 3 defined by the ring projection 8. F indicates the direction of rotation given by the engine hub 1: during normal operation hub 1, equipped with rollers 3, gives the driven hub 2, showing seatings 4, a rotation in the same direction F. Should the engine hub 1 undergo marked decelerations, rollers 3 act on the walls 4m upstream of the respective seatings 4, thus also slowing down the driven hub 2. However should the resisting moment transmitted to the driven hub 2 increase beyond the minimum value of the torque transmittable by the coupling in question, the lesser inclination of the walls 4v downstream allows engine hub 1 to continue its own rotation in direction F releasing itself from the driven hub 2. Of course the inclination of the two walls 4m and 4v of each seating 4 could take on different values according to the field of specific application of the coupling in question.

## Claims

1. Transmission coupling with limitation of the transmissible torque, of the type including two coaxial hubs (1, 2) which are linked to the elements to be coupled kinematically, these hubs (1, 2) having a plurality of equal rotating bodies (3) on their opposite transverse faces, these rotating bodies being stably housed in corresponding seatings with the possibility of rotating freely at least around their respective radial axes with respect to the said hubs (1, 2), and respectively the same number of seatings (4) for the said rotating bodies (3), said rotating bodies (3) and their respective seatings (4) being reciprocally distanced to such an extent that all the rotating bodies (3) are placed simultaneously in their respective seatings (4) for one single value of the reciprocal rotation of the said hubs (1, 2) around the common axis; the said rotating bodies (3) and the said seatings (4) being six and the angles at the centre defined by each pair of consecutive rotating bodies (3) are different from the others, characterized in that each of the said angles at the centre are not less than the angle at the centre which is immediately smaller plus the angle at the centre (δ) defined by each rotating body (3) or by each respective seating (4) and the greatest of the said angles at the centre is different from each angle at the centre added to the immediately smaller angle and subtracted from the said angle at the centre (δ) defined by each rotating body (3) or by each seating (4); said angles at the centre defined by each pair of consecutive rotating bodies (3) being equal to 105°, 29°, 94°, 48°, 69° and 15°, consecutively.

## Patentansprüche

1. Drehmomentbegrenzende Drehkupplung vom Typ enthaltend zwei koaxiale Naben (1, 2), welche an die Kinematisch zu kuppelnden Elemente angeschlossen sind, wobei diese Naben (1, 2) an ihren sich gegenüberliegenden Querflächen eine Anzahl von gleichen Drehkörpern (3) aufweisen, wobei diese Drehkörper stabil in entsprechenden Sitzen gelagert sind, und zwar mit der Möglichkeit, sich frei um wenigstens ihre entsprechende radiale Achse im Verhältnis zu den genannten Naben (1, 2) zu drehen, sowie jeweils die gleiche Anzahl von Sitzen (4) für die genannten Drehkörper (3), wobei die genannten Drehkörper (3) und deren entsprechende Sitze (4) einen gegenseitigen Abstand über eine solche Ausdehnung voneinander haben, dass alle Drehkörper (3) gleichzeitig in ihren entsprechenden Sitzen (4) angeordnet werden, und zwar um einen einzigen Wert der gegenseitigen Umdrehung der genannten Naben (1, 2) um die gemeinsame Achse; wobei die genannten Drehkörper (3) und die genannten Sitze (4) sechs sind und die durch ein jedes Paar der aufeinanderfolgenden Drehkörper (3) in der Mitte beschriebenen Winkel unterschiedlich voneinander sind, **dadurch gekennzeichnet,** dass jeder der genannten Winkel in der Mitte nicht geringer ist als der Winkel in der unmittelbar kleineren Mitte, vergrössert durch den Winkel in der Mitte (δ), der durch einen jeden Drehkörper (3) oder durch einen jeden entsprechenden Sitz (4) beschrieben wird, und der grösste der genannten Winkel in der Mitte unterschiedlich von jedem Winkel in der Mitte ist, summiert mit dem unmittelbar kleineren Winkel und abgezogen von dem genannten Winkel in der Mitte (δ), der durch jeden Drehkörper (3) oder durch jeden Sitz (4) beschrieben wird; wobei die genannten Winkel in der Mitte, beschrieben durch jedes Paar von aufeinanderfolgenden Drehkörpern (3), aufeinanderfolgend gleich 105°, 29°, 94°, 48°, 69° und 15° sind.

## Revendications

1. Accouplement de transmission avec limitation de couple, du type comprenant deux moyeux coaxiaux (1, 2) qui sont liés aux éléments qui doivent être couplés cinématiquement, ces moyeux (1, 2) comportant une pluralité de corps de roulement égaux (3) sur leurs faces transversales opposées, ces corps de roulement étant reçus de manière stable dans des logements correspondants avec la possibilité de tourner librement au moins autour de leurs axes radiaux respectifs par rapport auxdits moyeux (1, 2), et respectivement un égal nombre de logements (4) pour lesdits corps de roulement (3), lesdits corps de roulement (3) de leurs logements respectifs (4) étant écartés les uns des autres d'une mesure suffisante à permettre aux corps de roulement (3) d'être reçus simultanément dans leurs logements respectifs (4) pour une seule valeur de la rotation réciproque desdits moyeux (1, 2) autour de leur axe commun; lesdits corps de roulement (3) et lesdits logements (4) étant six et les angles au centre définis par chaque paire de corps de roulement consécutifs (3) étant différents les uns des autres, caractérisé en ce que chacun desdits angles au centre n'est pas inférieur à l'angle au centre immédiatement plus petit plus l'angle au centre (δ) défini par chaque corps de roulement (3) ou par chaque logement respectif (4), et le plus large desdits angles au centre est différent de chaque angle au centre ajouté à l'angle immédiatement plus petit et diminué dudit angle au centre (δ) défini par chaque corps de roulement (3) ou par chaque logement (4); lesdits angles au centre définis par chaque paire de corps de roulement consécutifs (3) étant égaux, respectivement et consécutivement à 105°, 29°, 94°, 48°, 69° et 15°.
